# EUROPEAN PATENT APPLICATION

(11) **EP 3 566 622 A1**
(43) Date of publication of application: **13.11.2019**
(21) Application number: 18736132.4
(22) Date of filing: 02.01.2018
(51) Int. Cl.: A47J 19/02, A47J 19/06, A47J 31/44

(54) **JUICE EXTRACTOR SCREW AND JUICE EXTRACTOR THEREOF**

(30) Priority: 05.01.2017 KR 20170000100 U
(71) Applicant: Hurom Co., Ltd., Gimhae-si, Gyeongsangnam-do 50969 (KR)
(72) Inventor: KIM, Young Ki, Gyeongsangnam-do 51006 (KR)
(74) Representative: Krauns, Christian
(86) International application number: PCT/KR2018/000060
(87) International publication number: WO 2018/128359

(57) **Abstract**

The present invention relates to a juice extractor screw and a juice extractor including the same, and the juice extractor screw according to the present invention includes: a cut-off portion configured to accommodate a juice-extracting material injected from a hopper and to primarily squeeze the juice-extracting material with a screw thread; and a squeezing portion configured to further squeeze the juice-extracting material conveyed from the cut-off portion, wherein an upper surface of the screw thread formed in the cut-out portion is formed to be inclined downward from the screw shaft toward an outer side thereof in a radial direction.

## Description

### [Technical Field]

The present invention relates to a juice extractor screw and a juice extractor including the same, which are capable of quickly conveying a juice-extracting target to an interior thereof.

### [Background Art]

In recent years, interest in health has been increasing in the home, and a use frequency of a juicer having a function of allowing juice to be taken from a juice-extracting target such as vegetables, fruits, or grains by an individual is increasing.

A general mode of operation of such a juicer is a method in which a juice-extracting target is pressed and squeezed by using a principle as that of milling soybeans and squeezing the juice, as disclosed in Korean Patent Registration No. 793852.

The juicer includes a driving unit for providing a rotational force, a screw for squeezing or crushing a juice-extracting target, a net drum for separating juice and debris crushed by an upper screw, and a juice-extracting drum including the upper screw and the net drum therein.

The screw receives the rotational force from the driving unit to perform a function of squeezing or crushing a juice-extracting target injected into the juice-extracting drum while rotating. That is, the juice-extracting target injected into the juice-extracting drum is squeezed by a narrow gap between the screw and the net drum by a screw thread formed on a side surface of the screw, and is conveyed to a lower side thereof.

In recent years, researches on the aforementioned elements have continued to improve juice-extracting efficiency of the juicer, and among them, the screw is configured to directly squeeze or crush the juice-extracting target, which directly affects the juice-extracting efficiency of the juicer, and thus the structure is actively being researched.

The screw according to the conventional art is formed in such a manner that an upper surface of the screw extends horizontally with respect to the ground, a plurality of screw threads are inclined downward from the upper surface of the screw, and the juice-extracting target is injected between the respective threads. The above-mentioned juice-extracting target is squeezed while being guided to an inner side and a lower side by the inclined screw threads.

However, when the upper surface of the screw is horizontally extended with respect to the ground as described above, an extent of the inclination of the screw threads extending downward from the upper surface of the upper horizontal screw is limited. In addition, since the distance between a material injection portion and the screw is not sufficiently wide, the injection and conveying of a material is not sufficiently smooth, and a moving speed of the juice-extracting target to a lower portion thereof is not high.

It is conceivable to form an entire vertical height of the screw to be longer, which increases a manufacturing cost of the screw and lowers a degree of design freedom.

### [Disclosure]

### [Technical Problem]

The present invention has been made in an effort to provide a juice extractor screw and a juice extractor including the same, which are capable of accomplishing sufficiently smooth injection and conveying of a material.

### [Technical solution]

An exemplary embodiment of the present invention provides a screw for a juice extractor, which is rotated about a screw shaft and includes screw threads formed on an external circumferential surface thereof, including: a cut-off portion configured to accommodate a juice-extracting material injected from a hopper and to primarily squeeze the juice-extracting material with a thread; and a squeezing portion configured to further squeeze the juice-extracting material conveyed from the cut-off portion, wherein an upper surface of the screw thread formed in the cut-out portion is formed to be inclined downward from the screw shaft toward an outer side thereof in a radial direction.

In the screw according to the exemplary embodiment of the present invention, the screw threads may be formed in an even number, and the even number of screw threads may be formed symmetrically about the screw shaft.

In the screw according to the exemplary embodiment of the present invention, the upper surface of the screw thread may be formed to be inclined downward along the circumferential direction.

An exemplary embodiment of the present invention provides a juice extractor including: a housing configured to have an upper surface that is opened and a lower end portion at which a debris outlet and a juice outlet are formed; a hopper detachably mounted on an upper portion of the housing to guide the juice-extracting material injected from the outside into the housing; a screw mounted inside the housing to receive a rotational force from a driving unit to rotate around a screw shaft, and to squeeze or crush the material with a screw thread formed on an outer side thereof; and a net drum disposed between the screw and the housing to form a gap with the screw to allow extracted juice to pass therethrough, wherein an upper surface of the screw thread is formed to be inclined downward from the screw shaft toward an outer side thereof in a radial direction.

The juice extractor according to the exemplary embodiment of the present invention may further include a brush disposed between the housing and the net drum to rotate and to sweep a surface of the net drum or the housing.

### [Advantageous Effects]

According to the exemplary embodiments of the present invention, as the screw has a screw thread extending from an upper surface thereof with high inclination, a cut-off space (cutting space) for a material may be widened such that injection of the material is very smooth and a moving speed of the juice-extracting target injected along the screw thread to a lower portion thereof is quicker. Accordingly, the juice-extracting target may be quickly conveyed to a lower portion of the screw without being clogged, to be squeezed and crushed, thereby improving performance of the juice extractor.

### [Description of the Drawings]

FIG. 1 illustrates a partial cross-sectional view of a juice extractor including a screw according to an exemplary embodiment of the present invention.
FIG. 2 illustrates a top plan view of a screw according to an exemplary embodiment of the present invention.
FIG. 3 illustrates a perspective view of a screw according to an exemplary embodiment of the present invention.
FIG. 4 illustrates a front view of a screw according to an exemplary embodiment of the present invention.

### [Mode for Invention]

An exemplary embodiment of the present invention will hereinafter be described in detail with reference to the accompanying drawings.

In addition, throughout the specification, unless explicitly described to the contrary, the word "comprise" and variations such as "comprises" or "comprising" will be understood to imply the inclusion of stated elements but not the exclusion of any other elements. For convenience of description, a direction close to the ground (lower side of the drawing) is referred to as a lower side, a lower surface, a lower end, or a similar name, and a direction away from the ground (upper side of the drawing) is referred to as an upper side, an upper surface, an upper end, or a similar name. Like reference numerals designate like elements throughout the specification. In addition, in the accompanying drawings, contents which are beyond the scope of the present invention are briefly described or omitted, and descriptions thereof are also briefly described or omitted.

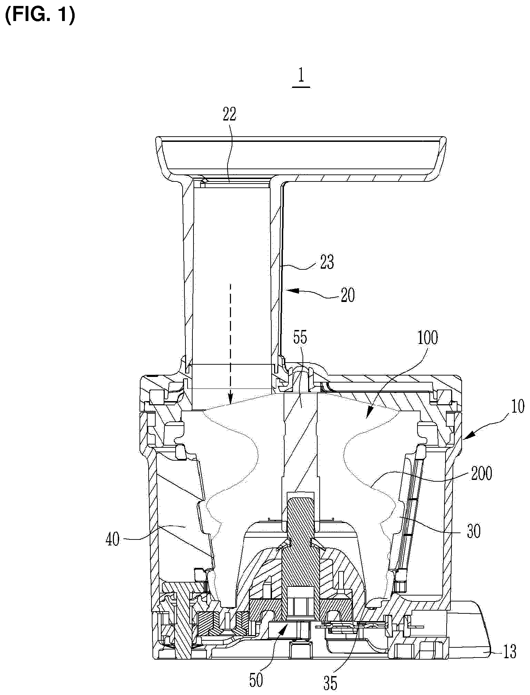

FIG. 1 illustrates a partial cross-sectional view of a juice extractor including a screw according to an exemplary embodiment of the present invention. The juice extractor illustrated in FIG. 1 is merely an example, and a technical idea of the present invention is not limited to the juice extractor illustrated in this specification and may be applied to various juice extractors.

Referring to FIG. 1 to FIG. 3, according to the exemplary embodiment of the present invention, an juice extractor includes a housing 10, a hopper 20, a net drum 30, a brush 40, and a screw 100.

The housing 10 may be formed in a columnar shape with an upper surface thereof that is opened, and a juice outlet (not illustrated) and a debris outlet 13 may be formed at a lower end thereof.

Juice flowing out from vents of the net drum 30 is discharged through the juice outlet, and the juice and debris separated from the juice is discharged through the debris outlet 13. The juice outlet and the debris outlet 13 are formed to be spaced apart from each other with reference to the net drum 30.

The hopper 20 is detachably mounted on an upper portion of the housing 10, and includes a material inlet 22 for allowing the material to be inserted into the housing 10, and a neck portion 23 for guiding the inserted material to the housing 10.

The juice-extracting target inserted into the material inlet 22 is dropped to the upper portion of the screw 100 disposed inside the housing 10 through the neck portion 23. To this end, the neck portion 23 is formed to be relatively long in a vertical direction and substantially perpendicular to the ground.

The net drum 30 is disposed between the housing 10 and the screw 100. The net drum 30 forms a narrow gap with the screw 100, and as the screw 100 rotates, the juice is squeezed by the narrow gap.

A plurality of vents (net holes) may be formed on a side surface of the net drum 30 such that the juice generated by the screw 100 may be discharged to the outside. The debris of the net drum 30 may not pass through the vents to be pushed downward and discharged through the debris outlet 13, while the juice passing through may be discharged through the juice outlet.

A seating portion 35 is formed to protrude radially inward along a circumferential direction at a lower end of the net drum 30, and a portion of the screw 100 is radially inserted into the seating portion 35. The debris that has not passed through the vents is discharged between the seat portion 35 and the screw 100.

A crushing drum 30 without mesh may be formed instead of the net drum 30. In this case, the juice-extracting target squeezed and crushed by the crushing drum 30 and the screw 100 is discharged into the juice outlet or the debris outlet 13 without being separated into juice and debris. The crushing drum 30 may be used when it is desired to obtain frozen foods such as ice cream, smoothies, and sherbet by putting together a material such as frozen fruit, chocolate, frozen dessert, ice, and beverage.

The brush 40 may be disposed between the housing 10 and the net drum 30, and may receive torque from a driving unit 50 to rotate. The brush 40 sweeps the surface of the net drum 30 or the housing 10, and the juice adsorbed to the net drum 30 or the housing 10 is smoothly conveyed to a lower portion thereof.

Further, when the user intends to clean an interior of the housing 10, a cleaner or water may be put into the housing 10, and the brush 40 may be operated. In this case, the brush 40 may completely remove the juice or debris adhered to the net drum 30 or the housing 10.

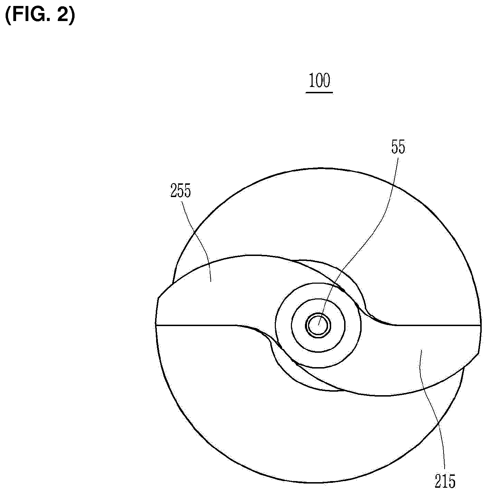

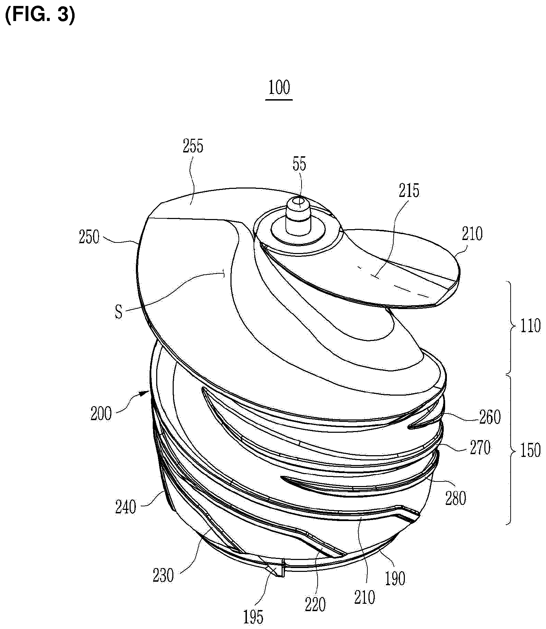

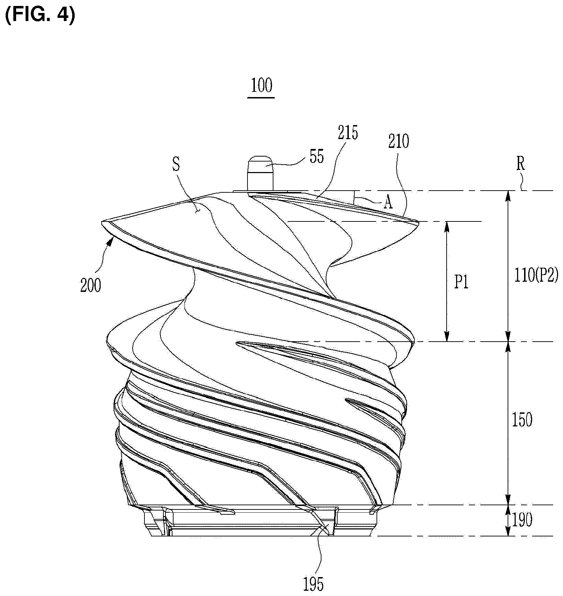

FIG. 2 illustrates a top plan view of a screw according to an exemplary embodiment of the present invention, FIG. 3 illustrates a perspective view of a screw according to an exemplary embodiment of the present invention, and FIG. 4 illustrates a front view of a screw according to an exemplary embodiment of the present invention. Hereinafter, the screw 100 will be described in more detail with reference to FIG. 2 to FIG. 4.

The screw 100 rotates by receiving the rotational force from the driving unit 50, to perform a function of squeezing or crushing the juice-extracting target. To that end, a screw shaft 55 is provided at a central portion of the screw 100 to rotate with the driving unit 50, and a plurality of screw threads 200 are formed at a portion that is in contact with the net drum 30 on an external circumferential surface of the screw 100. The juice-extracting target is squeezed by a narrow gap between the screw 100 and the net drum 30 to be conveyed to a lower side thereof by the screw threads 200.

The screw 100 according to the exemplary embodiment of the present invention may be roughly divided into a cut-out portion 110, a squeezing portion 150, and a lower portion 190.

The cut-out portion 110 is formed adjacent to the hopper 20 into which the juice-extracting target is inserted, and an interval P2 between the screw threads 200 is generally wide in order to accommodate more juice-extracting targets. The juice-extracting target that is put into the cut-off portion 110 is pressed and conveyed down by the screw threads 200.

The squeezing portion 150 is configured to squeeze the juice-extracting target so as to extract juice in the cut-off portion 110. To this end, an interval of the screw threads 200 formed in the squeezing portion 150 is more compact.

The lower portion 190 is formed to be stepped radially inward from the squeezing portion 150, and is seated on the seating portion 35 protruding radially inward from an interior circumference of a lower end of the net drum 30 (see FIG. 1).

Generally, when a pressure for pushing out the debris is small or a part of the debris is caught by the screw threads 200, the discharge of the debris is not smooth. As such, when the debris is not smoothly discharged, a high load is generated in the squeezing portion 150, thereby reducing juice-extracting efficiency. However, according to the present invention, the lower portion 190 is formed so as to be stepped radially inwardly of the squeezing portion 150, and is radially inserted into the seating portion 35. This may facilitate stable rotating of the screw 100, and may allow the debris guided to the lower portion 190 to be discharged while receiving a juice-extracting pressure at the step. A plurality of debris guide jaws 195 protruding radially outward are formed along a circumferential direction on the lower portion 190. The debris guide jaws 195 are rotated together with the rotating screw 100, to sweep down the debris which does not pass through the net holes of the net drum 30 in the squeezing portion 150 and pressed and conveyed to the lower portion 190, toward a lower side thereof. The guide jaws 195 formed on an external circumferential surface of the lower portion 190 completely remove the debris caught between the lower portion 190 and the seating portion 35 of the net drum 30, to further enhance the juice-extracting efficiency.

According to the exemplary embodiment of the present invention, the screw thread 200 formed on the screw 100 includes a first thread 210, a second thread 220, a third thread 230, a fourth thread 240, a fifth thread 250, a sixth thread 260, a seventh thread 270, and an eighth thread 280. A number of the threads is set to be eight, but the present invention is not limited thereto.

The first, second, third, and fourth threads 210, 220, 230, and 240 are respectively formed symmetrically with the fifth, sixth, seventh, and eighth threads 250, 260, 270, and 280 with respect to the screw shaft 55. For example, referring to FIG. 3, the first screw thread 210 and the fifth screw thread 250 are formed symmetrically with respect to the screw shaft 55.

As such, since the even number of threads are formed symmetrically with each other, a constant rotation moment is applied even when the screw 100 is rotated after the juice-extracting target is inserted into the screw 100, so that vibrations or noise generated in the juice extractor may be reduced, and increasing the juice-extracting efficiency.

In addition, according to the exemplary embodiment of the present invention, the first thread 210 and the fifth thread 250 respectively include a first thread upper surface 215 and a fifth thread upper surface 255 constituting an upper surface of the screw 100.

According to the conventional art, an upper surface of the cut-off portion 110 is formed to have a predetermined length P1 horizontally with the ground. Accordingly, when a juice-extracting material is inserted, there is a fear that the interval of the cut-off portion 110 is small, and thus it may not be smoothly conveyed downward.

On the other hand, according to the present invention, the first and fifth thread upper surfaces 215 and 255, which are the upper surfaces of the cut-off portion 110, are formed to be inclined downward from the screw shaft 55 radially outwardly. For example, referring to FIG. 4, the first thread upper surface 215 may extend radially outwardly and downwardly to have a predetermined first angle A with respect to a first reference line R, which is parallel to the ground.

As such, a portion of the screw threads 200 close to the screw shaft 55 is formed to protrude upward, and a portion thereof distant from the screw shaft 55 extends obliquely downward in an axial direction, and thus the interval P2 of the cut-out portion 110 may be wider. As a result, an accommodation space S for accommodating the injected juice-extracting material is widened, so that the injection of the material becomes very smooth, and the phenomenon of entanglement of the juice-extracting material is greatly reduced.

In addition, since the first and fifth thread upper surfaces 215 and 255 are formed to be inclined, the inclination of an external circumferential surface of the screw 100 near the screw shaft 55 becomes steeper. Therefore, the juice-extracting target taken from the hopper 20 is quickly guided to the squeezing portion 150 along an external circumferential surface of the screw 100 which is steeply inclined. As described above, according to the present invention, the juice-extracting material is rapidly conveyed to the squeezing portion 150 to improve the juice-extracting efficiency.

In addition, when the juice-extracting target falling through the hopper 20 falls on the first and fifth thread upper surfaces 215 and 255, the first and fifth thread upper surfaces 215 and 255 may quickly guide it to the first and fifth screw threads along the inclined surface.

On the other hand, according to an exemplary embodiment of the present invention, the first and fifth thread upper surfaces 215 and 255 may be formed to be inclined downward along a circumferential direction thereof. An inclination direction of the first and fifth thread upper surfaces 215 and 255 preferably faces roots of the first and fifth threads 215 and 255. Accordingly, the juice-extracting target falling from the hopper 20 may be quickly drawn into the first and fifth thread roots regardless of a position at which it falls.

On the other hand, even when the first and fifth thread upper surfaces 215 and 255 are inclined as described above, an axial length P1 of a radially outer end of the first and fifth thread upper surfaces 215 and 255 at the cut-out portion 110 is set in a same manner as that of the conventional art. As a result, it may be mounted on an inner side of the existing net drum 30, and the screw 100 of the present invention may be applied without changing a structure of the juice extractor.

## Claims

1. A juice extractor screw for a juice extractor, which rotates about a screw shaft and having a screw thread that is formed on an external circumferential surface thereof, the juice extractor screw comprising:
a cut-off portion configured to accommodate a juice-extracting material injected from a hopper and to primarily squeeze the juice-extracting material with a screw thread; and a squeezing portion configured to further squeeze the juice-extracting material conveyed from the cut-off portion,
wherein an upper surface of the screw thread formed in the cut-out portion is formed to be inclined downward from the screw shaft toward an outer side thereof in a radial direction.

2. The juice extractor screw of claim 1, wherein
the screw threads are formed in an even number, and
the even number of screw threads are formed symmetrically about the screw shaft.

3. The juice extractor screw of claim 1 or claim 2,
wherein the upper surface of the screw thread is formed to be inclined downward along the circumferential direction.

4. A juice extractor comprising:
a housing configured to have an upper surface that is opened and a lower end portion at which a debris outlet and a juice outlet are formed;
a hopper detachably mounted on an upper portion of the housing to guide the injected juice-extracting material into the housing;
a screw mounted inside the housing to receive a rotational force from a driving unit to rotate around a screw shaft, and to squeeze or crush the material with a screw thread formed on an outer side thereof; and
a net drum disposed between the screw and the housing to form a gap with the screw to allow extracted juice to pass therethrough,
wherein an upper surface of the screw thread is formed to be inclined downward from the screw shaft toward an outer side thereof in a radial direction.

5. The juice extractor of claim 4, further comprising
a brush disposed between the housing and the net drum to rotate and to sweep a side surface of the net drum or the housing.
